# EUROPEAN PATENT APPLICATION

(11) **EP 2 790 108 A2**
(43) Date of publication of application: **15.10.2014**
(21) Application number: 14160891.9
(22) Date of filing: 20.03.2014
(51) Int. Cl.: G06F 13/38

(54) **Information processing apparatus, memory control device, data transfer control method, and data transfer control program**

(30) Priority: 09.04.2013 JP 2013081652
(71) Applicant: FUJITSU LIMITED, Kawasaki-shi, Kanagawa 211-8588 (JP)
(72) Inventor: Hayasaka, Kazumi, Kanagawa, 211-8588 (JP); Higeta, Masanori, Kanagawa, 211-8588 (JP); Sugano, Fumitake, Kanagawa, 211-8588 (JP)
(74) Representative: HOFFMANN EITLE

(57) **Abstract**

A nonvolatile memory 3 manages stored data by using physical addresses. By using logical addresses associated with the physical addresses, an arithmetic processing unit 11 outputs a process instruction to be performed on data stored in the nonvolatile memory 3. On the basis of the process instruction output by the arithmetic processing unit 11, an access control unit 24 detects an instruction to move the data stored in the nonvolatile memory 3. An address conversion table control unit 22 stores therein the association relationship between the physical addresses and the logical addresses. When the access control unit 24 detects the instruction to move the data, the address conversion table control unit 22 changes the association relationship such that a logical address at the move destination is associated with the physical address in which the data is stored.

## Description

### FIELD

The embodiment discussed herein is directed to an information processing apparatus, a memory control device, a data transfer control method, and a data transfer control program.

### BACKGROUND

In recent years, auxiliary storage units, such as memory systems or storage systems, that use nonvolatile memories, such as NAND type flash memory devices, have been widely used in information processing apparatuses, such as servers.

When an auxiliary storage unit that includes this type of nonvolatile memory as a medium is used, software executes a process in response to an input of data in the nonvolatile memory and executes, when the process has been completed, a process that stores the data that has been subjected to the process in the nonvolatile memory. In this process, if the amount of data to be processed is large or if the amount of free space is small, data that is in a middle of the process or that has been updated may sometimes be temporarily stored in the nonvolatile memory.

When a process that temporarily stores the data that is in a middle of the process or that has been updated in the nonvolatile memory is performed, the following process is conceivably performed. Namely, even though there is no change between the update data that is temporarily stored in the nonvolatile memory and the data in which the process has been completed, there may be a case in which the finalized data obtained after the completion of the process is re-stored in the nonvolatile memory when the process has been completed. Consequently, a system bus is used to read or write the update data, and thus the performance in the entirety of the information processing apparatus is decreased.

In order to reduce the number of accesses to a nonvolatile memory, there is a proposed technology that replaces, when data is replaced between logical addresses, the association relationship between the logical addresses and the physical addresses.

Patent Document 1: Japanese Laid-open Patent Publication No. 2005-202942

However, in the conventional technology that replaces the association relationship between addresses, only the replacement is targeted and thus the moving of data, other than the replacement, inside a nonvolatile memory is not considered. Consequently, with the conventional technology that replaces the association relationship between the addresses, it is not possible to determine whether data is moved only inside the nonvolatile memory without being replaced; therefore, it is difficult to reduce the number of accesses to the nonvolatile memory. In other words, with the conventional technology that replaces the association relationship between addresses, the use rate of the buses is not able to be reduced and thus it is not possible to improve the performance of the system.

Accordingly, it is an object in one aspect of an embodiment of the invention to provide an information processing apparatus, a memory control device, a data transfer control method, and a data transfer control program that improves the performance of a system by reducing the number of times the reading and the writing of a nonvolatile memory.

### SUMMARY

According to an aspect of an embodiment, an information processing apparatus includes: a storing unit that stores therein data and that manages the stored data by using a physical address; a processing unit that outputs a process instruction to process, by using a logical address associated with the physical address, data stored in the storing unit; a detecting unit that detects, on the basis of the process instruction that is output from the processing unit, an instruction to move data stored in the storing unit; and an address changing unit that stores therein an association relationship between the physical address and the logical address and that changes, when the detecting unit detects the instruction to move the data, the association relationship such that the logical address at the move destination is associated with the physical address in which the data is stored.

### BRIEF DESCRIPTION OF DRAWINGS

FIG. 1 is a block diagram illustrating an information processing apparatus according to an embodiment;
FIG. 2 is a schematic diagram illustrating the hardware configuration of the information processing apparatus according to the embodiment;
FIG. 3 is a schematic diagram illustrating the relationship between physical addresses and logical addresses before data is moved;
FIG. 4 is a schematic diagram illustrating the relationship between the physical addresses and the logical addresses after the data has been moved;
FIG. 5 is a schematic diagram illustrating the state of data in the information processing apparatus before the data is moved;
FIG. 6 is a schematic diagram illustrating the state of data in the information processing apparatus after the data has been moved;
FIG. 7 is a flowchart illustrating the flow of a process performed when the moving of data in the information processing apparatus according to the embodiment has occurred;
FIG. 8 is a block diagram illustrating an example of a conventional information processing apparatus;
FIG. 9 is a schematic diagram illustrating the relationship between physical addresses and logical addresses after data in the conventional information processing apparatus has been moved;
FIG. 10 is a schematic diagram illustrating the state of data during a process for moving data performed by using a conventional technology that temporarily stores update data in a main memory;
FIG. 11 is a schematic diagram illustrating the state of data after the completion of the process for moving data performed by using the conventional technology that temporarily stores update data in the main memory;
FIG. 12 is a schematic diagram illustrating the state of data during a process for moving data performed by using a conventional technology that uses a temporary save area;
FIG. 13 is a schematic diagram illustrating the state of data after the completion of the process for moving data performed by using a conventional technology that uses a temporary save area;
FIG. 14 is a flowchart illustrating the flow of a process for moving data performed by using a conventional technology that temporarily stores the update data in the main memory;
FIG. 15 is a flowchart illustrating the flow of a process for moving data performed by using a conventional technology that uses a temporary save area;
FIG. 16 is a schematic diagram illustrating a first modification of the hardware configuration; and
FIG. 17 is a schematic diagram illustrating a second modification of the hardware configuration.

### DESCRIPTION OF EMBODIMENTS

Preferred embodiments of the present invention will be explained with reference to accompanying drawings. The information processing apparatus, the memory control device, the data transfer control method, and the data transfer control program disclosed in the present invention is not limited to the embodiment described below.

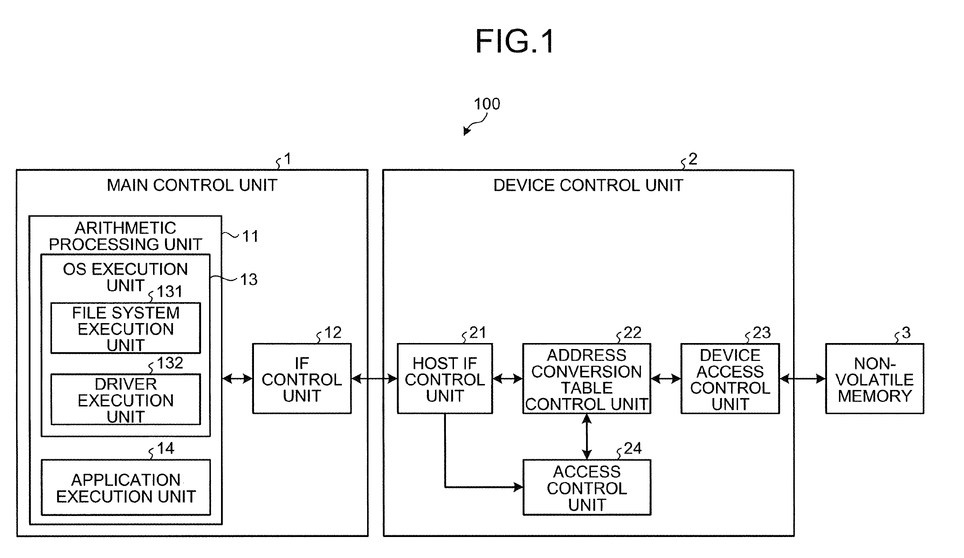

FIG. 1 is a block diagram illustrating an information processing apparatus according to an embodiment. As illustrated in FIG. 1, an information processing apparatus 100 according to the embodiment includes a main control unit 1, a device control unit 2, and a nonvolatile memory 3.

The main control unit 1 executes an OS or an application. The device control unit 2 controls the sending and receiving of data exchanged between the main control unit 1 and the nonvolatile memory 3.

The nonvolatile memory 3 is a storage device that stores therein information. For example, the nonvolatile memory 3 is a storage device that uses a NAND-type flash memory device (hereinafter, referred to as a "NAND device").

There are various limitations in an access method of the nonvolatile memory 3. For example, if a nonvolatile memory is a NAND device, data may sometimes be read or written in page units. The size of the page is, for example, 1 to 16 kilobytes; however, the size varies in accordance with the type of nonvolatile memory. At this point, if data is once written to a page, the data is not able to be overwritten on that page. With the nonvolatile memory, such as a NAND device, when new data is written to a page to which data is once written, the data stored in that page is erased and then data is newly written. However, with the nonvolatile memory such as a NAND device, when data stored in a page is erased, the data is not able to be erased in page units and thus the data is erased in block units, which is an assembly of one or more pages. The size of the block varies in accordance with the type of nonvolatile memory. In general, one block is constituted of, for example, 64 to 256 pages.

The main control unit 1 includes an arithmetic processing unit 11 and an interface (IF) control unit 12. Furthermore, the arithmetic processing unit 11 includes an OS execution unit 13 and an application execution unit 14.

The OS execution unit 13 executes an OS. Furthermore, the OS execution unit 13 includes a file system execution unit 131 and a driver execution unit 132.

The OS execution unit 13 includes the file system execution unit 131 that performs management by using data stored in the nonvolatile memory 3. The file system execution unit 131 manages the data stored in the nonvolatile memory 3 by using logical addresses.

The driver execution unit 132 instructs the IF control unit 12 to read and write data from and to the nonvolatile memory 3.

The arithmetic processing unit 11 reads and writes data from and to a logical address by using the file system execution unit 131, thereby, in practical, operating the reading and writing data from and to the physical addresses in the nonvolatile memory 3. Specifically, by instructing the file system execution unit 131 to read or writ data from or to the data, the arithmetic processing unit 11 instructs the IF control unit 12 to read or write the data by using the driver execution unit 132.

For example, by sending a command for reading data, i.e., by sending a read instruction to read data, to the IF control unit 12, the arithmetic processing unit 11 instructs the IF control unit 12 to read the data. Furthermore, by sending a write instruction for writing data, i.e., by sending a write instruction to write data, to the IF control unit 12, the arithmetic processing unit 11 instructs the IF control unit 12 to write the data.

The application execution unit 14 executes an application or the like in an OS executed by the OS execution unit 13.

If a move instruction is prescribed in communication between a host IF control unit 21 in the device control unit 2 and the IF control unit 12, the arithmetic processing unit 11 sends a move instruction to the IF control unit 12, thereby the arithmetic processing unit 11 instructs the moving of data. Furthermore, if a SWAP instruction is prescribed in communication between the host IF control unit 21 in the device control unit 2 and the IF control unit 12, the arithmetic processing unit 11 sends the SWAP instruction to the IF control unit 12, thereby the arithmetic processing unit 11 instructs the replacement of data.

The IF control unit 12 manages input and output of data, which is stored in the main control unit 1, to and from the device control unit 2. The IF control unit 12 receives an instruction to operate data by receiving, from the arithmetic processing unit 11, various operation commands, such as the writing and reading of data from and to the nonvolatile memory 3. Then, the IF control unit 12 outputs the received command to the host IF control unit 21 in the device control unit 2.

For example, the IF control unit 12 receives an input of a write instruction or a read instruction from the arithmetic processing unit 11. When the IF control unit 12 receives a read instruction to read data, the IF control unit 12 outputs, to the host IF control unit 21, the received read instruction to read the data. Similarly, when the IF control unit 12 receives a write instruction to write data, the IF control unit 12 outputs, to the host IF control unit 21, the received write instruction to write the data.

Furthermore, the IF control unit 12 receives a response to the output command from the host IF control unit 21. Then, the IF control unit 12 outputs the received response to the arithmetic processing unit 11. For example, when a command for reading data is output, if the reading of the data has been successful, the IF control unit 12 receives an input of the specified data from the host IF control unit 21. Then, the IF control unit 12 outputs the received data to the arithmetic processing unit 11. Furthermore, when a command for writing data is output, if the writing of the data has been successful, the IF control unit 12 receives a notification from the host IF control unit 21 indicating that the writing of the data has been completed. Then, the IF control unit 12 outputs the received notification to the arithmetic processing unit 11 indicating that the writing of the data has been completed.

The device control unit 2 includes the host IF control unit 21, an address conversion table control unit 22, a device access control unit 23, and an access control unit 24.

The host IF control unit 21 receives an input of a command from the IF control unit 12. The host IF control unit 21 analyzes the received command and then determines that the command indicates an access to the nonvolatile memory 3. Then, the host IF control unit 21 outputs, together with the command, a notification of the access to the nonvolatile memory 3 to the address conversion table control unit 22 and the access control unit 24.

Furthermore, the host IF control unit 21 receives a response to the received command from the address conversion table control unit 22. Then, the host IF control unit 21 outputs the received response to the IF control unit 12.

The access control unit 24 receives an input of a command from the host IF control unit 21. Then, on the basis of the type of input command, the previous and subsequent relationship of the command, the content of the command, or the like, the access control unit 24 determines whether an instruction received from the arithmetic processing unit 11 indicates the moving of data.

For example, if the access control unit 24 continuously receives a read command and a write command and if the access control unit 24 writes data that has been read in response to the read command, the access control unit 24 determines that the data, which is instructed to read, is to be moved. Specifically, if the access control unit 24 continuously receives a read command indicating that data is to be read from an address A1 in the nonvolatile memory 3 to an address B in the main memory and a write command indicating that data in the address B is to be written to an address A2 in the nonvolatile memory 3, the access control unit 24 can determine that the data is to be moved. Furthermore, when it is detected that identification information, which indicates that a read command and a write command are continuous instructions, is attached to the continuous read commands and the write commands, the access control unit 24 may also determine that the data is to be moved.

Furthermore, if a move instruction is prescribed in communication between the host IF control unit 21 and the IF control unit 12, when the access control unit 24 receives a move instruction, the access control unit 24 determines that the data, which is instructed by the move instruction, is to be moved. Similarly, if a SWAP instruction is prescribed in communication between the host IF control unit 21 and the IF control unit 12, when the access control unit 24 receives a SWAP instruction, the access control unit 24 determines that the data, which is instructed by the SWAP instruction, is to be moved. The SWAP instruction mentioned here is, for example, an instruction to swap data stored in an address in a memory for data stored in another address in the memory.

Furthermore, similar determination is also performed when a rewrite instruction to rewrite a table that is dedicated to the information processing apparatus 100 is prescribed, as an instruction to rewrite a table without actually moving data, in communication between the host IF control unit 21 and the IF control unit 12. Specifically, when the access control unit 24 receives a dedicate table rewrite instruction, the access control unit 24 determines that the data, which is instructed by the dedicated table rewrite instruction, is to be moved.

If the access control unit 24 determines that the data is to be moved, the access control unit 24 sends, to the address conversion table control unit 22, a request for a physical address of the data to be moved. Then, the access control unit 24 acquires the physical address of the data to be moved from the address conversion table control unit 22.

Then, the access control unit 24 instructs the address conversion table control unit 22 to associate the acquired physical address with the logical address that is obtained after the moving. Furthermore, the access control unit 24 notifies the address conversion table control unit 22 of an instruction indicating that the association relationship between the logical address and the physical address before the data, which is instructed to move, is made invalid.

For example, when the access control unit 24 determines, on the basis of the read command and the write command, that the data is to be moved, the access control unit 24 acquires, from the address conversion table control unit 22, the physical address that is associated with the logical address of the data that is specified by the read command. Then, the access control unit 24 instructs the address conversion table control unit 22 to associate the acquired physical address with the logical address at the destination to which the data is written and that is specified by the write command. Furthermore, the access control unit 24 notifies the address conversion table control unit 22 of an instruction indicating that the association relationship between the logical address and the physical address of the data specified by the read command is made invalid. Specifically, in this case, the logical address of the data that is specified by the read command becomes a logical address at the move source and the logical address of the data that is specified by the write command becomes a logical address at the move destination.

Furthermore, when the access control unit 24 determines, on the basis of a command for the move instruction, that the data is to be moved, the access control unit 24 acquires, from the address conversion table control unit 22, the physical address that is associated with the logical address at the move source that is specified by the move instruction. Then, the access control unit 24 instructs the address conversion table control unit 22 to associates the acquired physical address with a logical address at the move destination that is specified by the move instruction. Furthermore, the access control unit 24 notifies the address conversion table control unit 22 of an instruction indicating that the association relationship between the physical address and the logical address at the move source specified by the move instruction is made invalid. The same process is also used when, for example, a SWAP instruction or a dedicate table rewrite instruction is performed by the information processing apparatus 100.

The address conversion table control unit 22 includes an address conversion table that represents the association relationship between the physical addresses and the logical addresses. Because no limit is set to the amount of overwriting or writing of data to a hard disk drive or the like, no problem occurs even if the file system execution unit 131 manages stored data using a physical address of the hard disk. However, if the amount of overwriting or writing of data is limited, such as a nonvolatile memory, when software, such as a file system, manages physical addresses, it takes a long time to perform an arithmetic operation, a memory access, or the like, and thus the load applied to the arithmetic processing unit 11 is increased. Consequently, the address conversion table control unit 22 manages, by using an address conversion table, data by associating the logical address that is managed by the file system execution unit 131 and the physical address stored in the nonvolatile memory 3 in which data is actually stored.

The address conversion table control unit 22 receives, from the host IF control unit 21, a notification of an access to the nonvolatile memory 3 together with an input of a command. If no request for a physical address is received from the access control unit 24 thereafter, the address conversion table control unit 22 executes a process in accordance with the received command.

For example, if a read command is received, the address conversion table control unit 22 acquires, from the address conversion table, the physical address that is associated with the logical address specified by the command. Then, the address conversion table control unit 22 instructs the device access control unit 23 to acquire data from the acquired physical address. Then, the address conversion table control unit 22 acquires the data from the device access control unit 23. Then, the address conversion table control unit 22 outputs the acquired data to the host IF control unit 21.

Furthermore, if an erase instruction is received, the address conversion table control unit 22 acquires, from the address conversion table, the physical address that is associated with the logical address in which the data specified by the command is stored. Then, the address conversion table control unit 22 instructs the device access control unit 23 to invalidate the page that includes the acquired physical address.

At this point, if the address conversion table control unit 22 receives an erase instruction to erase the data due to the limit of the overwriting of data to the nonvolatile memory described above, the page in which the data instructed to erase is stored is made invalid until the data can be erased in block units. Hereinafter, the page that is made invalid is referred to as an "invalid page".

Furthermore, the address conversion table control unit 22 invalidates the physical address, which is associated with the logical address in the page that was made invalid in the address conversion table. For example, the address conversion table control unit 22 sets a flag indicating that the physical address is invalid in the logical address in the page that is made invalid in the address conversion table. Alternatively, the address conversion table control unit 22 may also invalidate a physical address by associating a value that is set in advance. For example, "all f" may set in the logical addresses in a page that is made invalid in the address conversion table.

Furthermore, if a write command is received, the address conversion table control unit 22 searches the address conversion table for a logical address at the write destination and then determines whether the write command indicates a new command or indicates a command to update data that has already been written.

If the write command is a new command, the address conversion table control unit 22 selects a physical address that is used to store therein the data from among the pages that are not invalid page (hereinafter, referred to as a "free page") in the address conversion table. Then, the address conversion table control unit 22 registers, in the address conversion table, the selected physical address such that the address is associated with the logical address that is specified by the command. Then, the address conversion table control unit 22 instructs the device access control unit 23 to write the data to the selected physical address.

Furthermore, if the commands indicates an update of the data that has already been written, the address conversion table control unit 22 selects, from among the free pages, a physical address that is used to store the data. Then, the address conversion table control unit 22 registers, in the address conversion table, the selected physical address such that the address is associated with the logical address that is specified by the command. Then, the address conversion table control unit 22 instructs the device access control unit 23 to write the data to the selected physical address. Furthermore, the address conversion table control unit 22 acquires the physical address associated with the logical address that is specified by the command from the address conversion table. Then, the address conversion table control unit 22 instructs the device access control unit 23 to invalidate the page that includes the acquired physical address. Consequently, the page in which the data before the update is stored is made invalid.

Furthermore, with a nonvolatile memory, such as a NAND device, the number of invalid pages are increased because the address conversion table control unit 22 invalidates a page when data is erased and updated and thus the number of free pages to which data can be written is decreased. Accordingly, in order to erase data in an invalid page to make the page free, the address conversion table control unit 22 collects invalid pages into the same block and then erases the data. This process may also be referred to as garbage collection. In the garbage collection, the address conversion table control unit 22 extracts a block that has a lot of invalid pages and then moves valid data present in the extracted block to a free page in another block. Consequently, all the pages in the extracted block become invalid pages. Then, the address conversion table control unit 22 erases the data in the block that stores therein all the pages are made invalid. Consequently, all the pages in the block in which data is erased become free pages and thus the address conversion table control unit 22 can newly write data to all of the pages in the extracted blocks.

When the access control unit 24 determines that data is to be moved, the address conversion table control unit 22 receives a request for a physical address from the access control unit 24. At this point, the address conversion table control unit 22 also receives the logical address of the data from the access control unit 24. Then, the address conversion table control unit 22 acquires the physical address that is associated with the logical address of the data from the data conversion table. Then, the address conversion table control unit 22 sends the acquired physical address to the access control unit 24.

Then, the address conversion table control unit 22 receives, from the access control unit 24, an instruction to associate the physical address of the data before a move with the logical address of the data after the move. Then, the address conversion table control unit 22 registers, in the address conversion table, the association relationship between the physical address and the logical address instructed by the access control unit 24.

Furthermore, the address conversion table control unit 22 receives, from the access control unit 24, an instruction to invalidate the association relationship between the logical address of the moved data before a move and the physical address of the moved data. Then, the address conversion table control unit 22 invalidates, in the address conversion table, the logical address of the moved data before the move and the physical address of the moved data. For example, the address conversion table control unit 22 sets, in the logical address before the move stored in the address conversion table, a flag indicating that the physical address is valid.

The device access control unit 23 receives, from the address conversion table control unit 22, a read instruction to read data, a write instruction to write data, an invalid instruction to invalidate a page, or the like together with the physical address of the target data.

If a read instruction to read data is received, the device access control unit 23 reads the data from the physical address that is specified by the nonvolatile memory 3 and then sends the data to the address conversion table control unit 22. If a write instruction to write data is received, the device access control unit 23 writes the data to the physical address that is specified by the nonvolatile memory 3. If an invalid instruction to invalidate a page is received, the device access control unit 23 invalidates the page associated with the specified physical address.

Furthermore, the device access control unit 23 receives, from the address conversion table control unit 22, an erase instruction to erase data in a block that is specified together with the instruction. Then, the device access control unit 23 erases data in all of the pages included in the specified block.

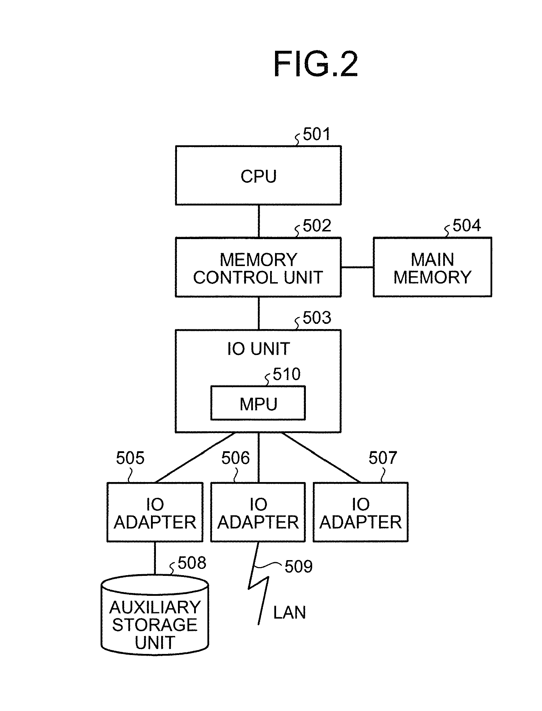

FIG. 2 is a schematic diagram illustrating the hardware configuration of the information processing apparatus according to the embodiment. As illustrated in FIG. 2, the information processing apparatus according to the embodiment includes a central processing unit (CPU) 501, a memory control unit 502, an IO unit 503, a main memory 504, IO adapters 505 to 507, and an auxiliary storage unit 508.

An example of the auxiliary storage unit 508 includes a hard disk, a nonvolatile memory, and the like. The auxiliary storage unit 508 implements the function performed by the nonvolatile memory 3 illustrated in FIG. 1.

The CPU 501 is connected to the memory control unit 502. The memory control unit 502 is connected to the main memory 504 and the IO unit 503.

The CPU 501, the memory control unit 502, and the main memory 504 implement the function performed by, for example, the arithmetic processing unit 11 or the IF control unit 12 in the main control unit 1 illustrated in FIG. 1. Furthermore, the CPU 501 reads various programs stored in the auxiliary storage unit 508, loads the programs in the main memory 504, creates a process that implements the function performed by an OS execution unit 13 or an application execution unit 14, and executes the process.

The IO unit 503 includes a micro processing unit (MPU) 510. Furthermore, the IO unit 503 is connected to the memory control unit 502 and sends and receives data. Furthermore, the IO unit 503 is connected to the IO adapters 505 to 507. The device control unit 2 is connected to the auxiliary storage unit 508 via the IO adapter 505.

The IO unit 503 and the IO adapter 507 implement the functions performed by, for example, the host IF control unit 21, the address conversion table control unit 22, the device access control unit 23, and the access control unit 24 illustrated in FIG. 1. For example, the MPU 510 executes the process that implements each of the functions.

Furthermore, the IO unit 503 is connected to a local area network (LAN) 509 via, for example, the IO adapter 506.

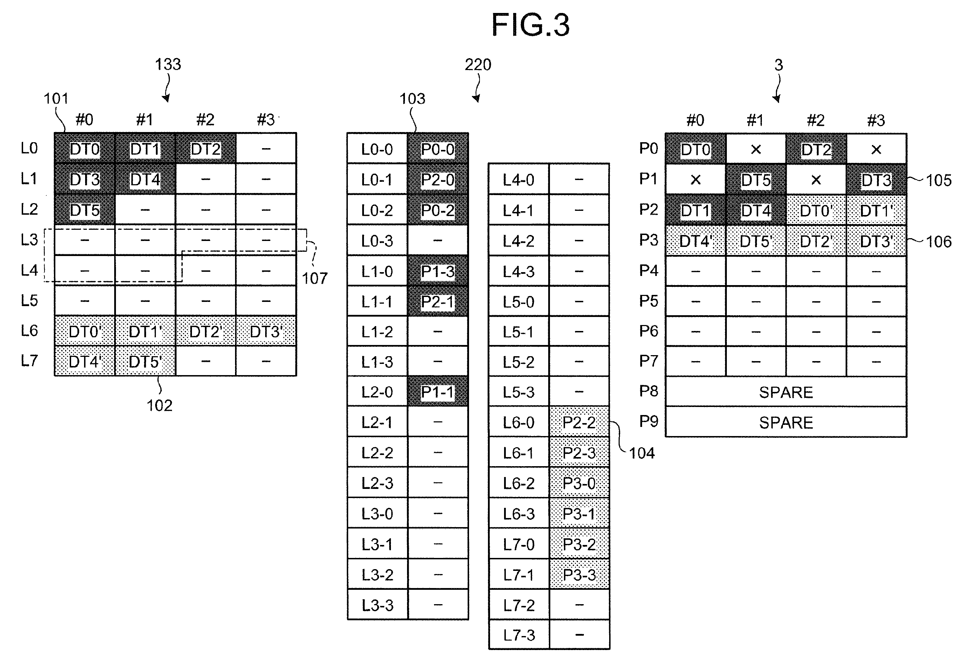

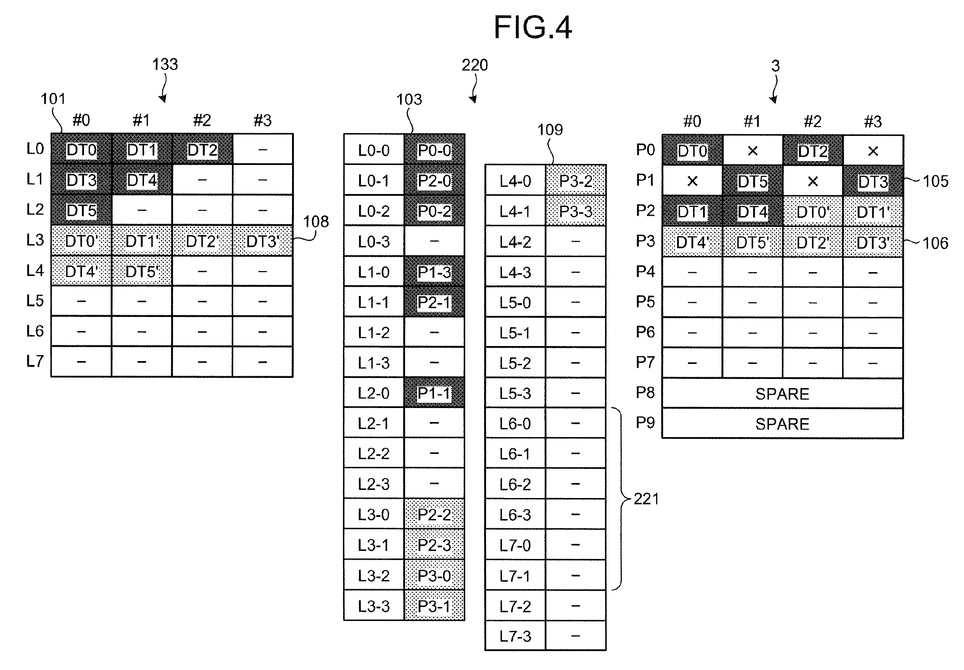

In the following, the relationship between the logical addresses and the physical addresses when data is moved by the information processing apparatus according to the embodiment will be described with reference to FIGS. 3 and 4. FIG. 3 is a schematic diagram illustrating the relationship between physical addresses and logical addresses before data is moved. FIG. 4 is a schematic diagram illustrating the relationship between the physical addresses and the logical addresses after the data has been moved. FIGS. 3 and 4 each illustrate the management area that is managed by the file system execution unit 131 using the logical addresses is represented by a file system 133.

In the following, a description will be given of a case in which the following process is performed. Namely, the arithmetic processing unit 11 performs arithmetic processing by using data (hereinafter, referred to as "original data") that is stored in the nonvolatile memory 3. Then, the arithmetic processing unit 11 temporarily stores the data that is updated during the process in the file system 133 and then formally stores the updated data in the file system 133 after the process has been completed. In a description below, this process is referred to as a "data move process performed when the process has been completed".

As illustrated in FIG. 3, original data 101 and update data 102 are stored in the file system 133 before the data is moved. At this point, the update data 102 is update data that is temporarily stored when the process is executed. The numbers (L0 to L7) illustrated on the left side of the vertical axis of the file system 133 illustrated in FIG. 3 indicate logical blocks. Furthermore, the numbers (#0 to #3) illustrated above the horizontal axis of the file system 133 indicate logical pages. Then, logical addresses are indicated by combinations of logical blocks and logical pages. In this example, each of the logical addresses is indicated by placing a logical block first and a logical page in this order, such as L0-0, L0-1, ..., L7-2, and L7-3.

The nonvolatile memory 3 illustrated in FIG. 3 schematically represents the state of the storage area. In the nonvolatile memory 3 before data is moved, original data 105 is stored and, furthermore, update data 106 is temporarily stored. Furthermore, a portion of the page to which "x" is attached in the nonvolatile memory 3 indicates an invalid page. The numbers (P0 to P7) illustrated on the left side of the vertical axis of the nonvolatile memory 3 illustrated in FIG. 3 indicate physical blocks. Furthermore, the numbers (#0 to #3) illustrated above the horizontal axis of the nonvolatile memory 3 indicate physical pages. Then, physical addresses are indicated by combinations of physical blocks and physical pages. In this example, each of the physical addresses is indicated by placing a physical block and a physical page in this order, such as P0-0, P0-1, ..., P7-2, and P7-3.

As illustrated in FIG. 3, the logical addresses are associated with the physical addresses and then registered in an address conversion table 220. In FIG. 3, a physical address 103 represents the physical address of the original data 105. Furthermore, the logical address that is associated with the physical address 103 is the logical address that stores therein the original data 101 in the file system 133. Furthermore, a physical address 104 indicates the physical address of the update data 106. The logical address that is associated with the physical address 104 is the logical address that stores therein the update data 102 in the file system 133. Specifically, the address conversion table according to the embodiment includes the list of logical addresses, which are managed by the file system execution unit 131, and physical addresses, which are stored in the nonvolatile memory 3 and are associated with the logical addresses in which data is stored.

In the state illustrated in FIG. 3, the access control unit 24 detects that the update data 102 that is temporarily stored in the file system 133 is moved to the logical address in an area 107.

Then, the access control unit 24 requests the physical address of the update data 102 from the address conversion table control unit 22. The address conversion table control unit 22 acquires, from the address conversion table 220, the physical address that is associated with the logical address in which the update data 102 is stored. In this case, because the logical addresses in which the update data 102 is stored is L6-0 to L7-1, the address conversion table 220 searches the address conversion table 220 for the logical addresses L6-0 to L7-1. Then, the address conversion table control unit 22 acquires the physical address 104 associated with the logical addresses L6-0 to L7-1. Then, the address conversion table control unit 22 sends the physical addresses P2-2 to P3-3 indicated by the physical address 104 to the access control unit 24.

The access control unit 24 acquires the physical address P2-2 to P3-3 from the address conversion table control unit 22. Then, the access control unit 24 notifies the address conversion table control unit 22 that the physical addresses P2-2 to P3-3 is associated with the logical addresses L3-0 to L4-1 in the area 107 in the file system 133.

The address conversion table control unit 22 receives, from the access control unit 24, an instruction to associate the logical addresses L3-0 to L4-1 with the physical addresses P2-2 to P3-3. Then, as illustrated in FIG. 4, the address conversion table control unit 22 registers the physical addresses P2-2 to P3-3 in a field that is associated with the logical addresses L3-0 to L4-1 in the address conversion table 220. In this case, because no change occurs in a physical address 109 associated with the logical address after the data has been moved, the physical address 109 is associated with the update data 106. Specifically, data is not moved inside the nonvolatile memory 3. In contrast, when the physical address 104 illustrated in FIG. 3 is compared with the physical address 109 illustrated in FIG. 4, the logical address has been changed. Specifically, as illustrated in FIG. 4, data is moved to the space indicated by update data 108 in the file system 133.

Furthermore, the access control unit 24 notifies the address conversion table control unit 22 of an instruction to invalidate the association relationship between the physical address 104 and the logical address before a move. In response to the received instruction indicating that the association relationship between the physical address 104 and the logical address before the move is made invalid, as illustrated in FIG. 4, the address conversion table control unit 22 invalidates the physical address that is associated with the logical address that is registered in a field 221 in the address conversion table 220.

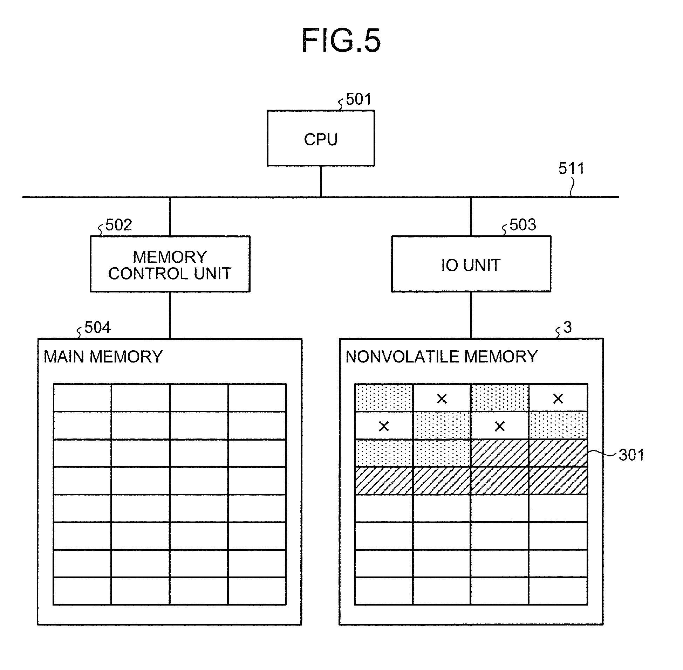

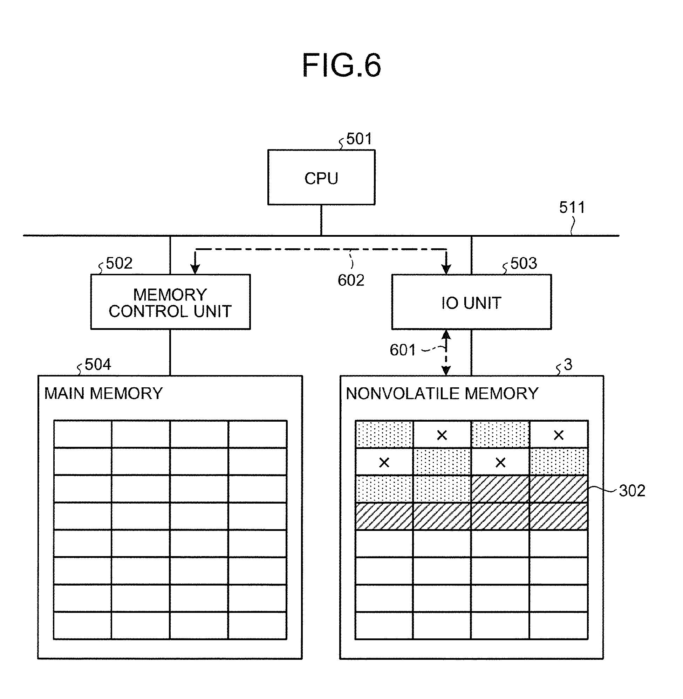

In the following, the use of a bus due to a move of data according to the embodiment will be described with reference to FIGS. 5 and 6. FIG. 5 is a schematic diagram illustrating the state of data in the information processing apparatus before the data is moved. FIG. 6 is a schematic diagram illustrating the state of data in the information processing apparatus after the data has been moved. FIGS. 5 and 6 each illustrate a case in which a data move process is performed when the process has been completed. In the following, a description will be given with the assumption that the update data that is temporarily stored in the nonvolatile memory 3 is the same as the determined updated data that has been subjected to the process.

Update data 301 that is temporarily stored is placed in the nonvolatile memory 3 illustrated in FIG. 5. Then, after the process has been completed, the IO unit 503 changes only the association relationship between the logical address and the physical address of the update data 301 in the address conversion table. Specifically, the IO unit 503 does not move the update data 301 stored in the nonvolatile memory 3. Furthermore, the moving of data between the IO unit 503 and the main memory 504 does not occur. In such a case, after the completion of the process, the state becomes the state illustrated in FIG. 6, in which update data 302 is the same as the update data 301 illustrated in FIG. 5 and thus no change occurs in the state illustrated in FIG. 6 when compared with the case illustrated in FIG. 5.

In this process, because the IO unit 503 only rewrites the address conversion table, a process 601 that reads or writes data between the nonvolatile memory 3 and the IO unit 503 does not occur. Furthermore, a process 602 that reads or writes data between the IO unit 503 and the memory control unit 502 does not also occur. Consequently, no access due to the moving of the data occurs among the CPU 501, the memory control unit 502, and the IO unit 503. Thus, it is possible to reduce the use of a bus 511 performed by the IO unit 503.

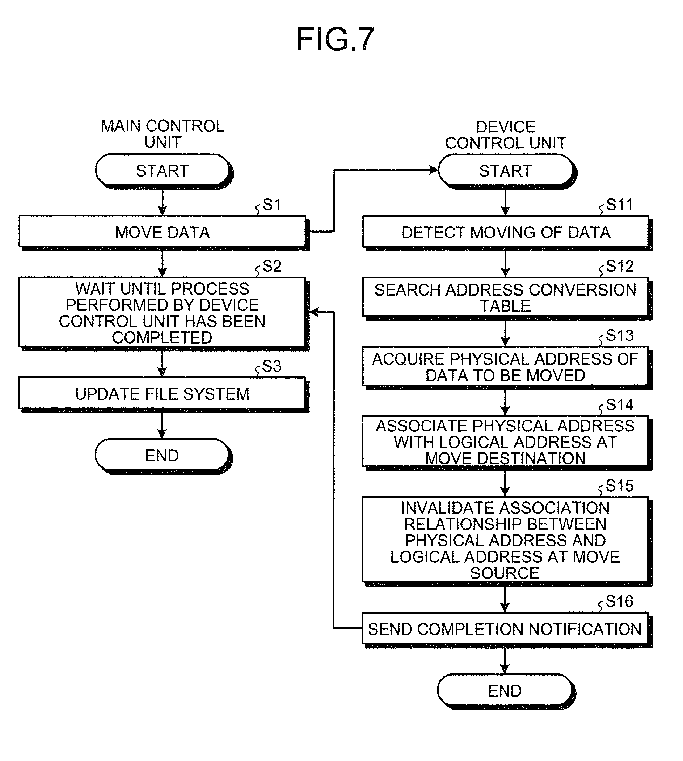

In the following, a process performed by the information processing apparatus 100 when the moving of data has occurred will be described with reference to FIG. 7. FIG. 7 is a flowchart illustrating the flow of a process performed when the moving of data in the information processing apparatus according to the embodiment has occurred. The flow illustrated on the left side in FIG. 7 indicates the process performed by the main control unit 1. Furthermore, the flow illustrated on the right side in FIG. 7 indicates the process performed by the device control unit 2.

The arithmetic processing unit 11 moves data stored in the management area in the file system execution unit 131 (Step S1). In this case, the arithmetic processing unit 11 outputs, to the device control unit 2 by using the driver execution unit 132, a command, such as a read and write instruction, a move instruction, a SWAP instruction, or an instruction to rewrite table that is dedicated to the information processing apparatus.

Then, the main control unit 1 waits until the process performed by the device control unit 2 has been completed (Step S2).

Thereafter, after a completion notification is received from the device control unit 2, the file system execution unit 131 updates its own file system in accordance with the change, due to the moving of the data, in the logical address of the data (Step S3).

In response to the command received from the main control unit 1, the access control unit 24 detects the moving of the data from the type of received command, the previous and subsequent relationship of the command, the content of the command, or the like (Step S11). If the access control unit 24 detects the moving of the data, the access control unit 24 requests, from the address conversion table control unit 22, the physical address that stores therein the data to be moved.

Then, the address conversion table control unit 22 receives, from the access control unit 24, a request for the physical address in which the data to be moved is stored. Then, the address conversion table control unit 22 searches the address conversion table for the logical address at the move source of the data (Step S12). The address conversion table control unit 22 sends, to the access control unit 24, the physical address of the data that is to be moved and that is acquired from the address conversion table.

The access control unit 24 acquires, from the address conversion table control unit 22, the physical address of the data to be moved (Step S13).

Then, the access control unit 24 instructs the address conversion table control unit 22 to associate the physical address of the data to be moved with the logical address of the data at the move destination. In response to the instruction received from the access control unit 24, the address conversion table control unit 22 associates the physical address of the data to be moved with the logical address at the move destination in the address conversion table (Step S14).

Furthermore, the access control unit 24 instructs the address conversion table control unit 22 to invalidate the association relationship between the physical address of the data to be moved and the logical address at the move source. In response to the instruction received from the access control unit 24, the address conversion table control unit 22 invalidates the association relationship, in the address conversion table, between the physical address of the data to be moved and the logical address at the move source (Step S15).

Then, the address conversion table control unit 22 sends a completion notification to the arithmetic processing unit 11 via the host IF control unit 21 (Step S16).

In the following, a description will be given by comparing a case in which data is moved by using a conventional technology with a case in which data is moved by using the information processing apparatus 100 according to the embodiment.

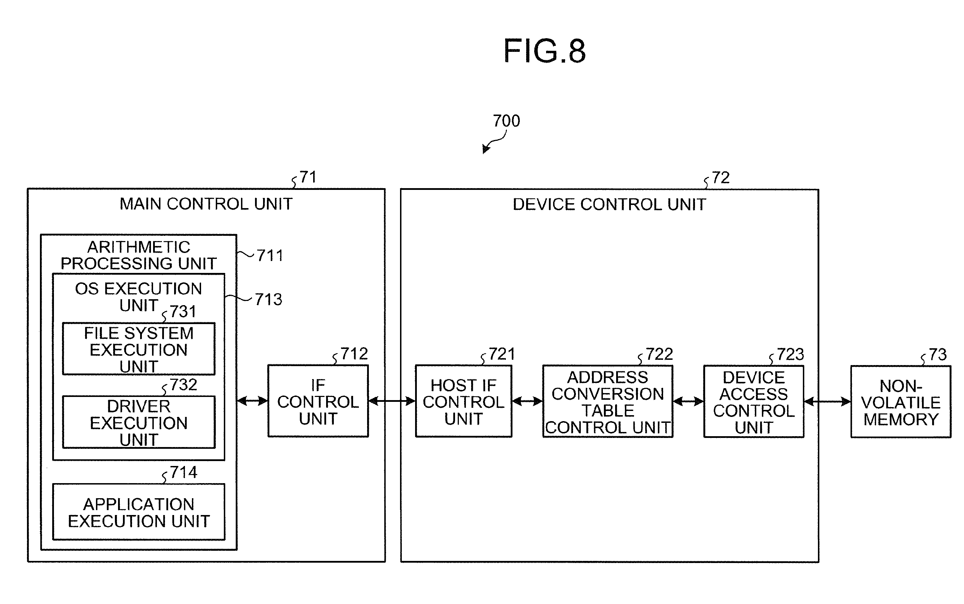

FIG. 8 is a block diagram illustrating an example of a conventional information processing apparatus. In the following, a description will be given of an information processing apparatus, as an information processing apparatus according to the conventional technology, that has the configuration in which the function performed by the access control unit 24 is excluded from the information processing apparatus 100 according to the embodiment.

A main control unit 71 in an information processing apparatus 700 used in the conventional technology includes the same function as that performed by the main control unit 1 according to the embodiment. An arithmetic processing unit 711 corresponds to the arithmetic processing unit 11 in FIG. 1. An OS execution unit 713 corresponds to the OS execution unit 13 in FIG. 1. An IF control unit 712 corresponds to the IF control unit 12 in FIG. 1. An application execution unit 714 corresponds to the application execution unit 14 in FIG. 1. A file system execution unit 731 corresponds to the file system execution unit 131 in FIG. 1. A driver execution unit 732 corresponds to the driver execution unit 132 in FIG. 1. Furthermore, a host IF control unit 721 and a device access control unit 723 in a device control unit 72 in the information processing apparatus 700 used in the conventional technology have the same function as that performed by the host IF control unit 21 and the device access control unit 23, respectively, in the embodiment.

When data is moved, similarly to the embodiment, in addition to rewriting an address conversion table, an address conversion table control unit 722 reads and writes data from and to the nonvolatile memory 3.

A nonvolatile memory 73 has the same function as that performed by the nonvolatile memory 3 according to the embodiment.

Furthermore, it is assumed that the hardware configuration of the conventional information processing apparatus has the same hardware configuration as that in the embodiment illustrated in FIG. 2.

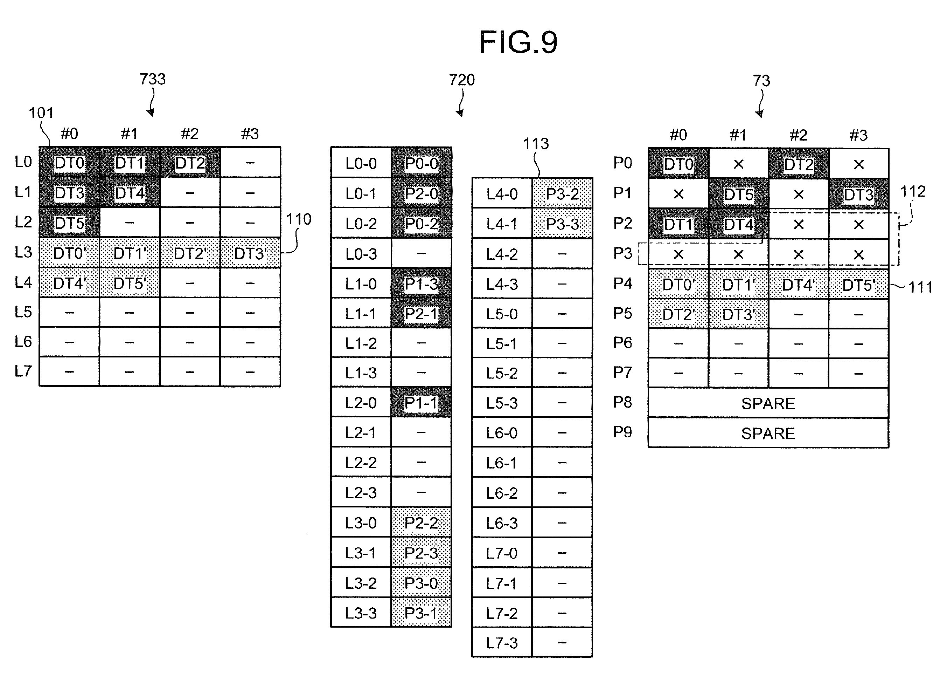

In the following, a description will be given, with reference to FIG. 9, of the relationship between the logical addresses and the physical addresses when data is moved by using the conventional technology in which a nonvolatile memory is used as an auxiliary storage unit. FIG. 9 is a schematic diagram illustrating the relationship between physical addresses and logical addresses after data in the conventional information processing apparatus has been moved. FIG. 9 illustrates the relationship between the physical addresses and the logical addresses after the conventional information processing apparatus moves data from the state illustrated in FIG. 3. FIG. 3 illustrates the relationship between the physical addresses and the logical addresses according to the embodiment. In the following, a description will be given with the assumption that the conventional information processing apparatus is in the state illustrated in FIG. 3. Specifically, a description will be given of a case in which the conventional information processing apparatus moves the update data 102 to the area 107 illustrated in FIG. 3. An address conversion table 720 is an address conversion table that is used in the conventional information processing apparatus. Furthermore, FIG. 9 illustrates the management area that is managed by a file system execution unit 731 using the logical address is indicated as a file system 733.

As illustrated in FIG. 9, the update data 102 illustrated in FIG. 3 is moved to the location indicated by update data 110 in the file system 733. At this point, the update data 106 illustrated in FIG. 3 is temporarily read. Then, the read data is rewritten to a free page in the nonvolatile memory 73 as update data 111 illustrated in FIG. 9. Then, the read area becomes an invalid page, such as an area 112 illustrated in FIG. 9.

Then, in the address conversion table 720, the association relationship between the logical address at the move source and the physical address in the area 112 is made invalid. Furthermore, the logical address of the update data 110 at the move destination is associated with a physical address 113 of the update data 111 that has been moved.

As described above, with the conventional information processing apparatus, an invalid page is created in the nonvolatile memory. However, with the information processing apparatus according to the embodiment, because the moving of data does not occur in a nonvolatile memory when the data is moved, it is possible to reduce the number of invalid pages created in the nonvolatile memory. Consequently, when compared with the conventional information processing apparatus, it is possible to reduce a decrease in the number of free pages to which data can be written.

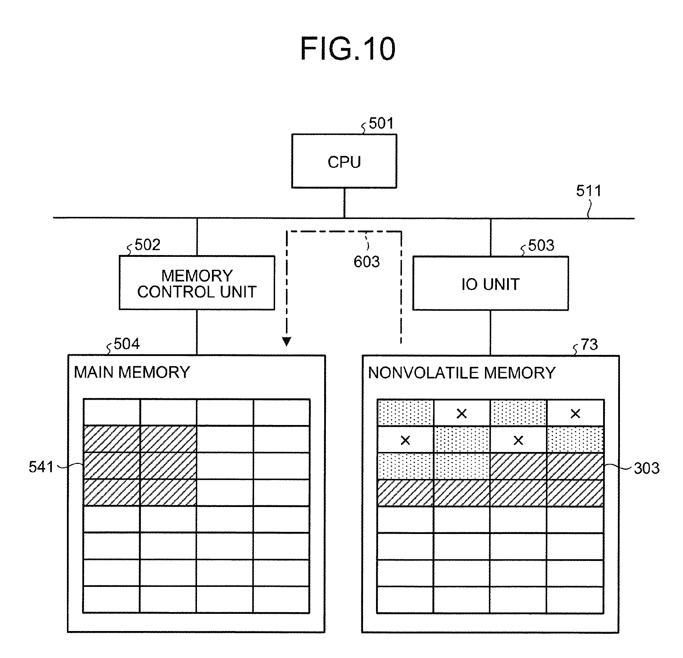

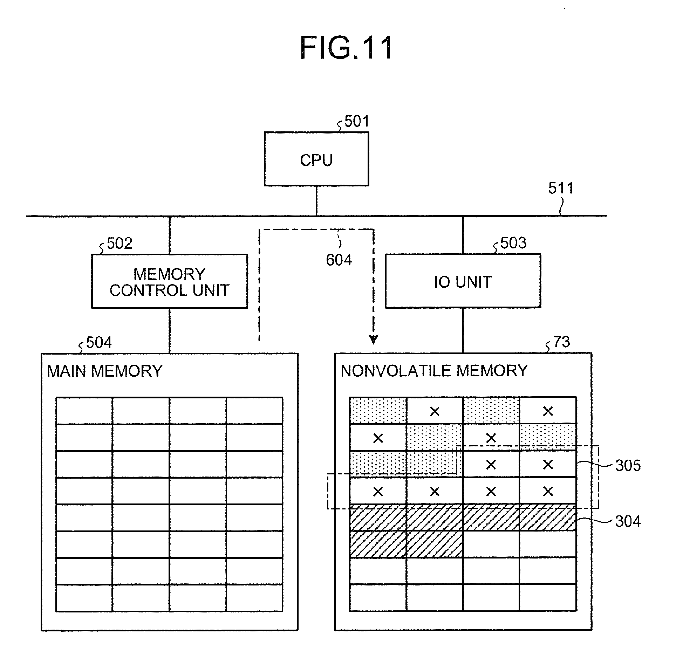

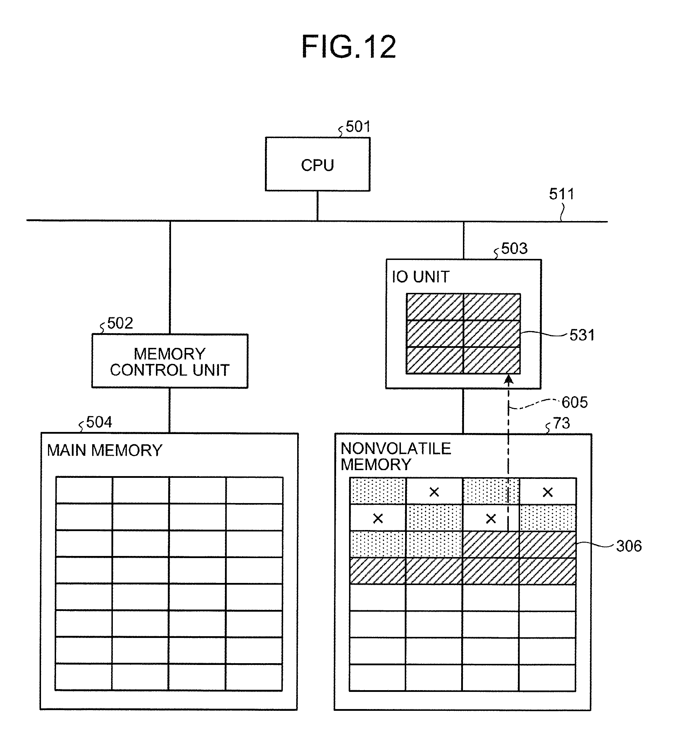

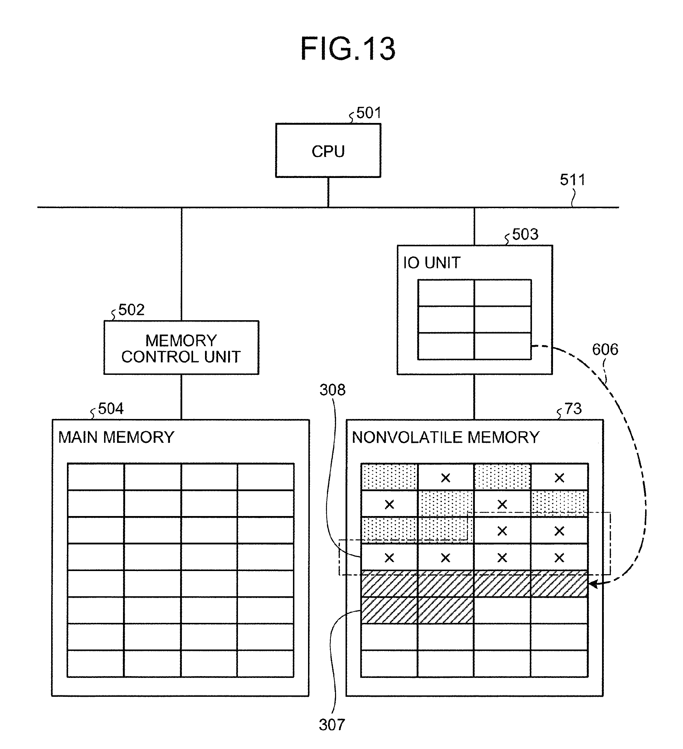

In the following, a description will be given, with reference to FIGS. 10 to 14, the use of a bus when data is moved by using the conventional technology in which a nonvolatile memory is used as an auxiliary storage unit. FIG. 10 is a schematic diagram illustrating the state of data during a process for moving data performed by using a conventional technology that temporarily stores update data in a main memory. FIG. 11 is a schematic diagram illustrating the state of data after the completion of the process for moving data performed by using the conventional technology that temporarily stores update data in the main memory. FIG. 12 is a schematic diagram illustrating the state of data during a process for moving data performed by using a conventional technology that uses a temporary save area. FIG. 13 is a schematic diagram illustrating the state of data after the completion of the process for moving data performed by using a conventional technology that uses a temporary save area.
FIGS. 10 and 11 each illustrate the state of data in an information processing apparatus when the data is moved from the state illustrated in FIG. 5 after the completion of the process performed by using the conventional technology. Specifically, when arithmetic processing has been completed by the arithmetic processing unit 11, the IO unit 503 moves the update data that is temporarily stored in the nonvolatile memory 73 to the main memory 504 and then re-stores the data as the determined updated data in the nonvolatile memory 73.

In this case, as illustrated in FIG. 10, the IO unit 503 reads update data 303 that is temporarily stored in the nonvolatile memory 73 and then stores the update data 303 in the main memory 504 as update data 541. Consequently, a move process 603 for moving the data from the nonvolatile memory 73 to the main memory 504 occurs. Specifically, due to the move process 603, an access to the IO unit 503 from the memory control unit 502 via the IO unit 503 by using the bus 511 occurs.

Thereafter, as illustrated in FIG. 11, the IO unit 503 reads the update data 541 in the main memory 504 and then stores the update data 541 in the nonvolatile memory 73 as update data 304. Furthermore, the IO unit 503 invalidates the page included in an area 305 in which the update data 303 illustrated in FIG. 10 is previously stored. Consequently, a move process 604 for moving the from the main memory 504 to the nonvolatile memory 73 occurs. Specifically, due to a move process 604, an access occurs between the IO unit 503 and the main memory 504 via the bus 511. Furthermore, between the IO unit 503 and the nonvolatile memory 73, a process for reading and writing the update data and a process for invalidating a page are performed.

As described above, with the conventional technology, when an arithmetic processing unit 711 moves update data, the moving of the update data occurs between the IO unit 503 and the main memory 504 and thus an access via the bus 511 occurs. In contrast, with the information processing apparatus 100 according to the embodiment, when the arithmetic processing unit 11 moves update data, as described above, the occurrence of access via the bus 511 can be reduced. Specifically, with the information processing apparatus 100 according to the embodiment, when compared with the conventional technology, it is possible to reduce the number of accesses between the memory control unit 502 and the IO unit 503 via the bus 511 when the move processes 603 and 604 are performed and thus the use of the bus 511 can be reduced.

Furthermore, with the information processing apparatus 100 according to the embodiment, when the arithmetic processing unit 11 moves update data, a process for reading and writing the update data between the IO unit 503 and the nonvolatile memory 3 and a process for invalidating a page are not performed. Specifically, with the information processing apparatus 100 according to the embodiment, when compared with the conventional technology, it is possible to reduce the number of accesses to the nonvolatile memory 3 occurring due to the process for reading and writing update data between the IO unit 503 and the nonvolatile memory 3 and occurring due to the process for invalidating a page. More specifically, with the information processing apparatus 100 according to the embodiment, when compared with the conventional technology, it is possible to improve the performance of accessing the nonvolatile memory 3.

In the following, a case in which data is moved by using another conventional technology will be described with reference to FIGS. 12 and 13. FIGS. 12 and 13 are schematic diagrams each illustrating the state of data in an information processing apparatus when the data is moved from the state illustrated in FIG. 5 after the completion of the process performed by using the conventional technology. Specifically, when arithmetic processing has been completed by the arithmetic processing unit 11, the IO unit 503 moves the update data that is temporarily stored in the nonvolatile memory 73 to the temporary save area in the IO unit 503. Then, the IO unit 503 re-stores the update data, which is stored in the temporary save area, in the nonvolatile memory 73 as the determined update data.

In this case, as illustrated in FIG. 12, the IO unit 503 reads update data 306 that is temporarily stored in the nonvolatile memory 73 and then stores the update data 306 as update data 531 in the temporary save area in the IO unit 503. Consequently, a data move process 605 for moving the data from the nonvolatile memory 73 to the IO unit 503 occurs.

Thereafter, as illustrated in FIG. 13, the IO unit 503 reads the update data 531 in the temporary save area and then stores the update data 531 as updated data 307 in the nonvolatile memory 73. Consequently, a data move process 606 for moving data from the IO unit 503 to the nonvolatile memory 73 occurs. Furthermore, the IO unit 503 invalidate the page included in an area 308 in which the update data 306 illustrated in FIG. 12 is previously stored. Consequently, an access from the IO unit 503 occurs in the nonvolatile memory 73 due to invalidating the page.

With the conventional technology that uses a temporary save area in the IO unit 503, when the arithmetic processing unit 711 moves update data, no access via the bus 511 occurs. However, the data move processes 605 and 606 occur between the IO unit 503 and the nonvolatile memory 73 and an invalidating process occurs and thus an access to the nonvolatile memory 73 occurs. In contrast, with the information processing apparatus 100 according to the embodiment, when the arithmetic processing unit 11 moves update data, a process for reading and writing update data does not occur between the IO unit 503 and the nonvolatile memory 3 and, furthermore, an invalidating process is not performed on a page. Specifically, with the information processing apparatus 100 according to the embodiment, when compared with the conventional technology that uses a temporary save area in the IO unit 503, it is possible to reduce the number of accesses to the nonvolatile memory 3. More specifically, with the information processing apparatus 100 according to the embodiment, when compared with the conventional technology that uses a temporary save area in the IO unit 503, it is possible to improve the performance of accessing the nonvolatile memory 3.

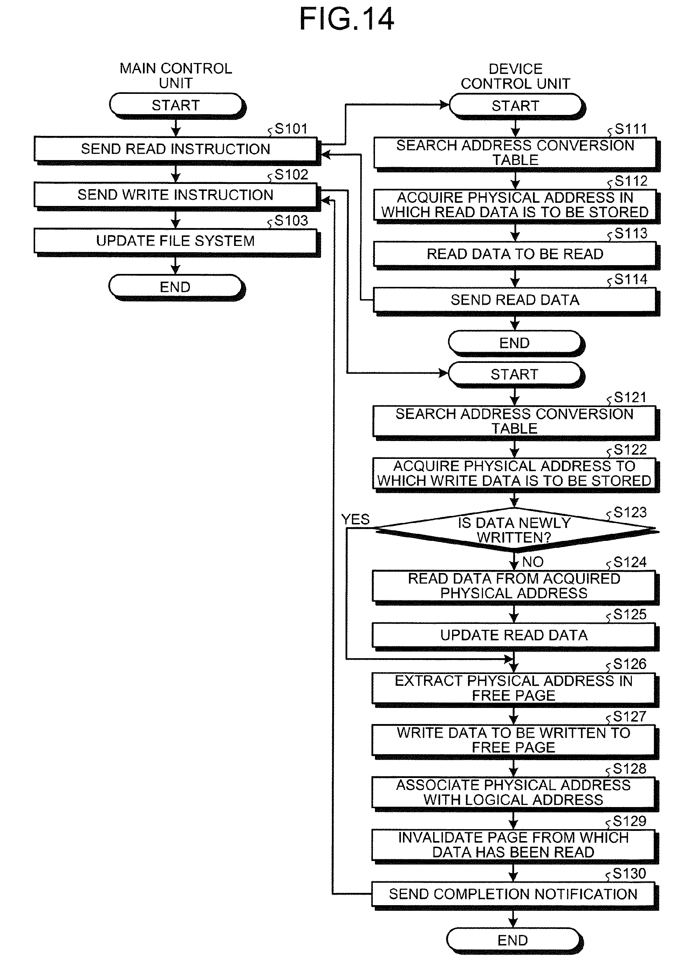

In the following, a data move process performed by the conventional technology that temporarily stores update data in the main memory 504 and then moves the data will be described with reference to FIG. 14. FIG. 14 is a flowchart illustrating the flow of a process for moving data performed by using a conventional technology that temporarily stores the update data in the main memory. In the following, a description will be given of a case of moving data by reading the data and then writing the read data.

The arithmetic processing unit 711 sends, to the file system execution unit 731, an instruction as a notification indicating the reading of data (Step S101). Hereinafter, target data that is to be read is referred to as "read target data". In this case, the arithmetic processing unit 711 outputs, by using a driver execution unit 732, a read instruction to the device control unit 72. The file system execution unit 731 reads the data from the specified logical address. After sending the instruction as the notification indicating the reading of the data, the arithmetic processing unit 711 waits until the read target data is received from the device control unit 72.

Subsequently, the arithmetic processing unit 711 notifies the file system execution unit 731 of an instruction to write the data (Step S102). Hereinafter, the target data that is to be written is referred to as "write target data". In this case, the arithmetic processing unit 711 outputs, by using the driver execution unit 732, a write instruction to the device control unit 72. The file system execution unit 731 writes the read data to a logical address that is different from the logical address at the read source. After sending a notification as the instruction to write the data, the main control unit 71 waits until a completion notification is received from the device control unit 72.

Then, after the file system execution unit 731 receives the completion notification from the device control unit 72, the file system execution unit 731 updates, due to the change in the logical address in which the data is stored, the file system that is managed by the file system execution unit 731 (Step S103).

In response to the read instruction received from the main control unit 71, the address conversion table control unit 722 searches the address conversion table for a logical address of the read target data (Step S111).

Then, the address conversion table control unit 722 acquires the physical address in which the read target data is to be stored (Step S112).

Then, the address conversion table control unit 722 reads, from the acquired physical address, the read target data in the nonvolatile memory 73 (Step S113).

Then, the address conversion table control unit 722 sends the read target data to the main control unit 71 (Step S114).

In response to the write instruction received from the main control unit 71, the address conversion table control unit 722 searches the address conversion table for the logical address to which the write target data is to be written (Step S121).

The address conversion table control unit 722 acquires the physical address of the write target data to be stored (Step S122).

Then, the address conversion table control unit 722 determines whether the specified writing of the data is a new writing (Step S123). If it is a new writing (Yes at Step S123), the address conversion table control unit 722 proceeds to Step S126.

In contrast, if already existing data is to be updated (No at Step S123), the address conversion table control unit 722 reads the data from the acquired physical address in the nonvolatile memory 73 (Step S124).

Then, the address conversion table control unit 722 updates the read data to the acquired write target data (Step S125).

Then, the address conversion table control unit 722 extracts, from the address conversion table, the physical address in a free page (Step S126).

Thereafter, the address conversion table control unit 722 writes the write target data to the free page of the extracted physical address in the nonvolatile memory 73 (Step S127).

Furthermore, the address conversion table control unit 722 associates the logical address at the writing destination of the write target data with the physical address to which the write target data has been written and then registers the addresses in the address conversion table (Step S128).

Furthermore, the address conversion table control unit 722 invalidates the page from which data before the update is read (Step S129).

Then, the address conversion table control unit 722 sends a completion notification to the arithmetic processing unit 711 via the host IF control unit 721 (Step S130).

As described above, if the conventional technology is used, when compared with the flow of the process performed by the information processing apparatus 100 according to the embodiment illustrated in FIG. 7, a process, such as the reading and the sending of read target data, are additionally needed to be performed. Furthermore, with the conventional technology, when compared with the information processing apparatus 100 according to the embodiment, processes, such as a process for reading data before the data is updated due to the writing of the data, a process for updating data, a process for writing data, and a process for invalidating a page, are additionally need to be performed. Specifically, with the information processing apparatus 100 according to the embodiment, when compared with the conventional technology, it is possible to reduce the load applied to the device control unit 2.

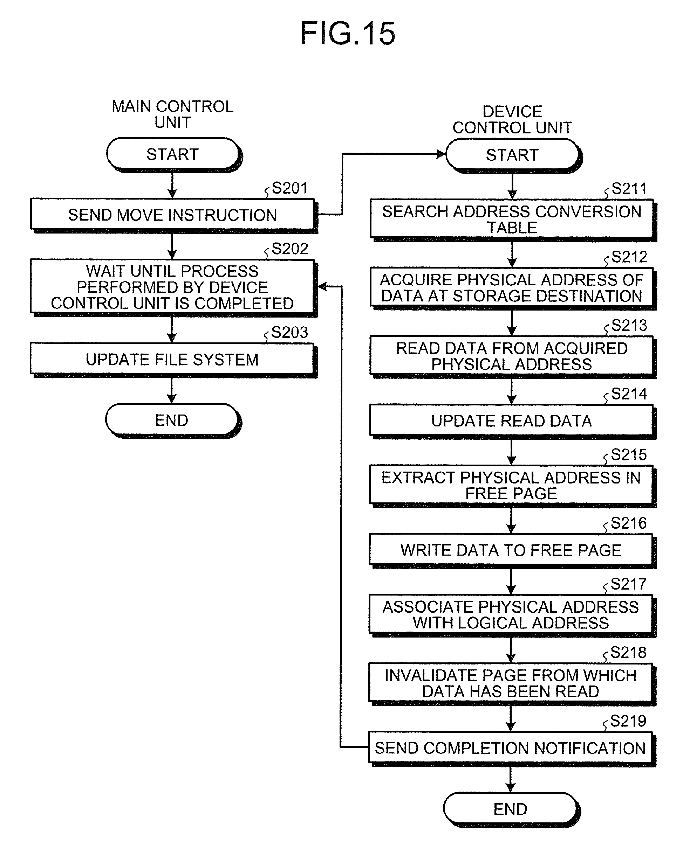

In the following, a data move process performed in the conventional technology in which update data is temporarily stored in a temporary save area in the device control unit 72 will be described with reference to FIG. 15. FIG. 15 is a flowchart illustrating the flow of a process for moving data performed by using a conventional technology that uses a temporary save area. In the following, a description will be given of a case in which data is moved by using a move instruction.

The arithmetic processing unit 711 notifies the file system execution unit 731 of a move instruction for data in a management area in the file system execution unit 731 (Step S201). In this case, the arithmetic processing unit 711 outputs a move instruction to the device control unit 72 by using the driver execution unit 732.

Then, the main control unit 71 waits until the process performed by the device control unit 72 has been completed (Step S202).

Then, after receiving a completion notification from the device control unit 72, the file system execution unit 731 updates the file system, which is managed by the file system execution unit 731, in accordance with the change in the logical address in which the data is stored due to the moving of the data (Step S203).

In response to the move instruction received from the main control unit 71, the address conversion table control unit 722 searches the address conversion table for a logical address to which the write target data is written (Step S211).

The address conversion table control unit 722 acquires the physical address of the data at the storage destination (Step S212).

Then, the address conversion table control unit 722 reads the data from the acquired physical address in the nonvolatile memory 73 (Step S213).

Then, the address conversion table control unit 722 updates the read data to the acquired data (Step S214).

Then, the address conversion table control unit 722 extracts, from the address conversion table, a physical address in a free page (Step S215).

Then, the address conversion table control unit 722 writes the write target data to the free page of the extracted physical address in the nonvolatile memory 73 (Step S216).

Furthermore, the address conversion table control unit 722 associates the logical address to which the write target data is to be written with the physical address to which the write target data has been written and then registers the addresses in the address conversion table (Step S217).

Furthermore, the address conversion table control unit 722 invalidates the page from which the data before an update is read (Step S218).

Then, the address conversion table control unit 722 sends a completion notification to the arithmetic processing unit 711 via the host IF control unit 721 (Step S219).

As described above, even when the conventional technology that includes a temporary save area is used, when compared with the information processing apparatus 100 according to the embodiment illustrated in FIG. 7, processes, such as a process for reading data before the data is updated, a process for updating data, a process for writing data, and a process for invalidating a page, are additionally needed to be performed. Consequently, even when compared with the conventional technology that includes a temporary save area, the information processing apparatus 100 according to the embodiment can reduce the load applied to the device control unit 2.

As described above, the information processing apparatus according to the embodiment determines whether data is to be moved on the basis of the type of command, the previous and subsequent relationship of the command, and the content of the command, and then rewrites the association relationship between the logical address and the physical address in the address conversion table. Specifically, with the information processing apparatus according to the embodiment, when data is moved, the moving of the data does not performed inside a nonvolatile memory. Consequently, it is possible to reduce the use of a system bus due to an access performed between the nonvolatile memory and the main memory and thus it is possible to improve the performance of the system.

Furthermore, because the information processing apparatus according to the embodiment moves data by only rewriting the address conversion table, the data can be moved more quickly.

Furthermore, with the information processing apparatus according to the embodiment, a process for reading and writing data from and to a nonvolatile memory can be eliminated; therefore, it is possible to improve the performance of accessing the nonvolatile memory. Furthermore, because the number of accesses to the nonvolatile memory can be reduced, it is possible to prevent the nonvolatile memory from being degraded.

Furthermore, in the above explanation, a description has been given of a case of using the information processing apparatus that has the hardware configuration illustrated in FIG. 2; however, another hardware configuration may also implement the same function.

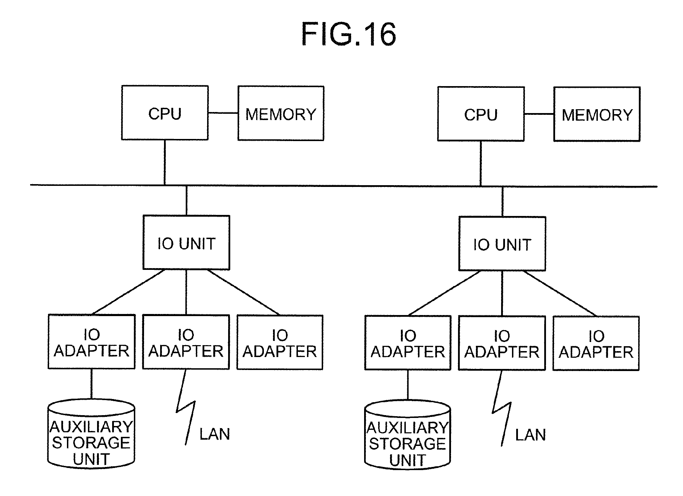

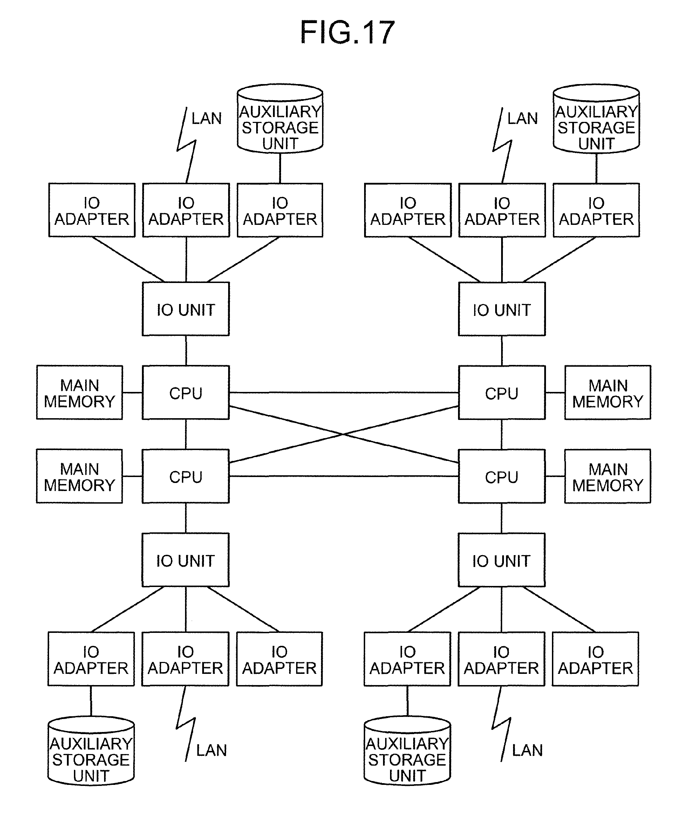

FIG. 16 is a schematic diagram illustrating a first modification of the hardware configuration. FIG. 17 is a schematic diagram illustrating a second modification of the hardware configuration.

For example, as in a first modification illustrated in FIG. 16, it is possible to implement each of the functions described in the embodiment even when a memory is connected to a CPU.

Furthermore, for example, as in a second modification illustrated in FIG. 17, it is also possible to implement each of the functions described in the embodiment even when a system, such as High Performance Computing (HPC), in which multiple numbers of CPUs are provided and are connected with each other is used.

According to an aspect of an embodiment of the information processing apparatus, the memory control device, the data transfer control method, and the data transfer control program disclosed in the present invention, an advantage is provided in that the performance of the system can be improved.

## Claims

1. An information processing apparatus (100) comprising:
a storing unit (3) that stores therein data and that manages the stored data by using a physical address;
a processing unit (11) that outputs a process instruction to process, by using a logical address associated with the physical address, data stored in the storing unit (3);
a detecting unit (24) that detects, on the basis of the process instruction that is output from the processing unit (11), an instruction to move data stored in the storing unit (3); and
an address changing unit (22) that stores therein an association relationship between the physical address and the logical address and that changes, when the detecting unit (24) detects the instruction to move the data, the association relationship such that the logical address at the move destination is associated with the physical address in which the data is stored.

2. The information processing apparatus (100) according to claim 1, wherein the detecting unit (24) detects, on the basis of the previous and subsequent relationship of the process instruction that is output from the processing unit (11), the instruction to move the data.

3. The information processing apparatus (100) according to claim 1 or 2, wherein
the processing unit (11) outputs a change instruction to change a logical address in which data is stored as the instruction to move the data, and
the address changing unit (22) changes the association relationship such that a physical address, which is associated with a logical address before a change due to the change instruction, is associated with a logical address after the change.

4. The information processing apparatus (100) according to any one of claims 1 to 3, wherein, when the processing unit (11) outputs the instruction to move data or a swap instruction or outputs a write instruction to write, to the storing unit (3), data that is read after a read instruction to read the data is output from the storing unit (3), the detecting unit (24) detects the instruction to move the data.

5. The information processing apparatus (100) according to any one of claims 1 to 4, wherein
the storing unit (3) is a nonvolatile memory, and
the information processing apparatus (100) further comprises a memory control unit (23) that reads, when data is moved inside the storing unit, the data stored in the storing unit (3), that writes the read data to a different area in the storing unit (3), and that invalidates the area from which the data is read.

6. A data transfer control method comprising:
receiving, performed by a control unit that controls a memory (3), a process instruction to process, by using a logical address associated with a physical address that is included in the memory (3), data stored in the memory (3);
detecting, performed by the control unit and on the basis of the received process instruction, an instruction to move data; and
changing, performed by the control unit, when an instruction to move the data is detected, on the basis of an association relationship between the physical address and the logical address which is stored in advance, the association relationship such that a logical address at the move destination is associated with the physical address in which the data is stored.

7. A data transfer control program causing a computer to execute a process comprising:
receiving a process instruction to process, by using a logical address associated with a physical address in a memory (3), data stored in the memory (3);
detecting, on the basis of the received process instruction, an instruction to move data; and
changing, when an instruction to move the data is detected, on the basis of an association relationship between the physical address and the logical address which is stored in advance, the association relationship such that a logical address at the move destination is associated with the physical address in which the data is stored.
